# EUROPEAN PATENT APPLICATION

(11) **EP 2 317 247 A2**
(43) Date of publication of application: **04.05.2011**
(21) Application number: 10013713.2
(22) Date of filing: 18.10.2010
(51) Int. Cl.: F24J 2/54

(54) **Photovoltaic solar tracker**

(30) Priority: 27.10.2009 ES 200930916
(71) Applicant: Hierros y Aplanaciones, S.A. (HIASA), 33470 Corvera Asturias (ES)
(72) Inventor: Orlando, Simancas, Montoto, 33470 Corvera Asturias (ES)
(74) Representative: Tari Lazaro, Aida

(57) **Abstract**

Of the type comprising an array of north-south alignments of photovoltaic solar panels (6) supported on posts (7) with the mediation of rotary transmitter shaft units (9) for movement, and linked together by means of an east-west shaft (2) which incorporates a linear actuator (1). The support between the posts (7) and the rotary transmitter shaft units (9), which consist of a machined shaft joint to two hexahedra, is done by means of two self-lubricated bronze bushings (13) in the form of a half-ring. The linear actuator (1) is advantageously arranged in the central part of the tracker, and the different elements forming the east-west shaft (2) are linked together by means of two pairs of angle brackets (15) joined together by a threaded bar (11), with the attachment being secured by means of a pair of flat-bars (14).

## Description

The present invention relates to a single axis photovoltaic solar tracker, intended for the generation of electrical energy. The applicable sector is that of renewable energies.

### Background of the invention

Solar plants are known in which a photovoltaic panel is responsible for transforming solar energy into electrical energy. These panels are fitted on a support structure which can be classified into two major groups:
- Fixed structures; in which the solar panels are orientated to the south, with an angle of inclination that is fixed according to the location of the installation.
- Solar trackers; whose rotary structure keeps the solar panels perpendicular to the sun's rays, following the trajectory of the sun during the course of the entire day. Depending on the type of movement, these trackers can in turn be classified into:
   ○ Dual axis solar trackers, which have two types of solar tracking movement (azimuthal and zenithal).
   ○ Single axis solar trackers, which display just one type of solar tracking movement (azimuthal or zenithal).

The use of this type of structure, with solar tracking, increases the energy production of the installations by between 24% and 30% (single axis trackers) and between 28% and 40% (dual axis trackers) compared to that produced by installations with fixed structures.

The increase in the productivity of dual axis solar trackers compared to that of single axis ones is minimal which, added to the complexity of their tracking systems, their high maintenance cost, low reliability and high price for such a small increase in efficiency, make the single axis tracker option more interesting.

Document ES 200801565 U raises the problem already mentioned of individual drives, along with the risks of corrosion shown by single axis solar trackers with just a single drive for a large number of panels. The proposed solution lies in using aluminium shapes for the structures, and transmission by means of a toothed belt. Such a solution is expensive and suffers from a lack of precision in positioning of the panels.

As a result, it is an aim of the present invention to provide a single axis solar tracker that is precise and resistant to corrosion.

### Description of the invention.

The inventive solar tracker consists of a series of north-south alignments of solar panels, materialized in main girders which rotate on an array of posts, and joined together in their central part by means of an east-west shaft, which is the transmitter of the movement to a linear actuator located in the central part of the tracker allowing the north-south alignments to rotate about their axis from east to west. With this configuration, where the actuator is located in the central zone of the tracker, optimum structural dimensioning is achieved of the components corresponding to the east-west shaft, the transmitter of the movement, since compression stresses in the most unfavourable zone of this element are reduced by 50% with respect to the same element in other trackers of similar characteristics with the actuator at one end.

Located on the posts is a support inside which are introduced two self-lubricating bronze half-bushings on which a rotary transmitter shaft unit performs its movement at the same time as it transmits it between the main girders. The rotary transmitter shaft comprises a machined shaft attached at its ends to two hexahedra which fit tightly inside the main girders.

The east-west shaft transmits the movement of the linear actuator to the main girders by means of a connecting rod located in the centre of each north-south alignment. With this, all the alignments are made to move by means of a single actuator, with an identical tracking movement for each row of panels.

Located perpendicular to the main girders will be some secondary girders on which the solar panels will be fixed.

The entire structure of this tracker is made of steel and has a surface finish which is hot galvanized by means of immersion. This finish guarantees a high durability of the structure towards rusting. Unlike with other trackers of similar characteristics, the design of the entire structure has been done so that all the joins between elements to be carried out on site are screwed, and there are no on-site tasks to be done that could harm the surface treatment, such as cutting of elements or welding between elements, which would become converted into points that are certain to rust during the life of the tracker.

The inventive solar tracker displays numerous advantages:
- High resistance to corrosion, with an economical structure.
- High precision in positioning, of +/- 0.5°, compared to +/- 2° achieved with the prior art.
- Owing to its low height (less than 3 m) the environmental impact is minimal in relation to other kinds of solar trackers which range from 5 to 12 metres in height.
- Perfect adaptability of the device to any size of photovoltaic panel.
- Minimum civil work owing to the low stresses which the posts transmit to the foundations.
- Maintenance is reduced to just the bronze bearings of the main shafts and specific maintenance for the linear actuator, both devices being extremely simple.
- It just requires basic auxiliary means of assembly on account of the lightness and ease of handling of the different elements, given their small size.
- In the event of a fault in an individual photovoltaic panel, there would be no need to disconnect the whole of the solar tracker, just the N-S alignment where the fault is located would need to be disconnected.
- When maintenance works need to be carried out, there is no need to interrupt the solar tracking process, nor to use any kind of elevation means.
- In the event of a fault in the actuator responsible for the movement of the tracker, the device can continue to produce electricity as if it were a fixed structure device.

### Brief description of the drawings

In order to complement the foregoing description and with the aim of aiding a better understanding of the characteristics of the invention, a detailed description is going to be made of a preferred embodiment, on the basis of a set of plans attached to this descriptive specification in which, on an illustrative basis and without being limiting, the following has been represented:
Figure 1 shows a perspective view of the inventive solar tracker.
Figure 2 shows an east-west elevation view of the inventive solar tracker.
Figure 3 shows an elevation view of a north-south alignment.
Figure 4 shows a cast iron support for a bearing.
Figure 5 shows an adjustment piece for the bearing support.
Figure 6 shows a perspective view of the rotary transmitter shaft unit.
Figure 7 shows a detail of the rotary transmitter shaft unit mounted on the main girders, and supported by a post.
Figure 8 shows the detail of figure 7 in an exploded view.
Figure 9 shows the attachment element for the secondary girders to the main girders.
Figure 10 shows the folded piece for fastening of the panels.
Figure 11 shows the connecting rod for the main girder to the east-west shaft.
Figure 12 shows the attachment element for the east-west shaft.

In the above figures, the numerical references correspond to the following parts and elements:
1. Linear actuator
2. East-west shaft
3. Connecting rod
4. Main girder
5. Secondary girder
6. Photovoltaic panel
7. Posts
8. Cast iron support for bearing
9. Rotary transmitter shaft unit
10. Adjustment piece
11. Threaded bar
12. Folded piece
13. Bushings
14. Flat-bars
15. Angle brackets

### Detailed description of a preferred embodiment

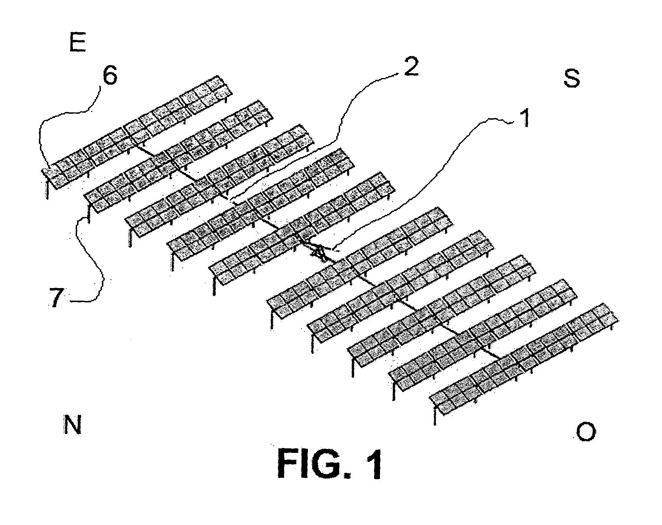

As can be seen in figures 1 to 3, each north-south alignment is supported by several posts (7). Located between the two central posts is the east-west shaft (2) responsible for transmission of the movement of a linear actuator (1), therefore these two central posts will be closer to each other, keeping the distance between the rest constant.

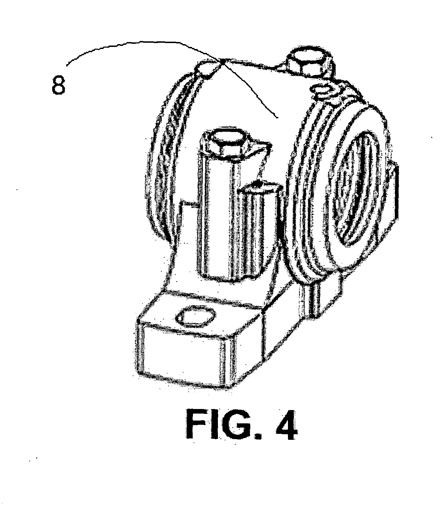

Making reference now to figures 4 to 8, located on the upper part of each post (7) is a cast iron support for a bearing (8) into which are introduced two half bushings (13), of self-lubricating bronze, on which a rotary transmitter shaft unit (9) performs its rotary movement and transmits it between two adjacent main girders (4). This allows:
1. A considerable reduction in friction in the rotation zones, which allows the linear actuator to be optimized.
2. Greater precision to be had in the angular movement (+/- 050 °).
3. Greater reliability and useful life of the system by reducing the existing friction and having a self-lubricating material.
4. Ease of maintenance owing to the fact that the shape of these two bronze bushings in the form of a half-ring allows them to be changed at the end of their useful life without having to remove any element of the tracker and allowing this maintenance operation to be performed with the tracker in operation.

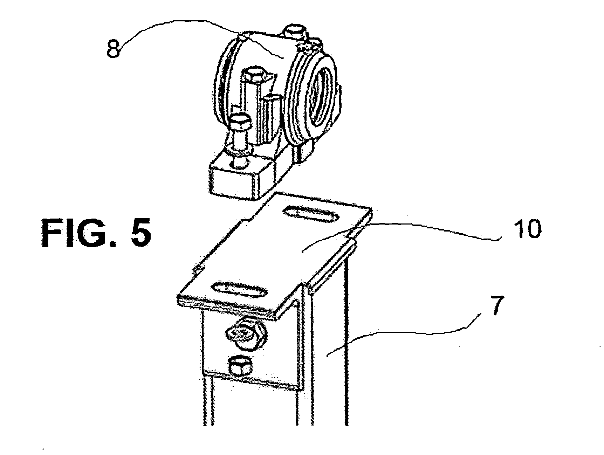

These cast iron supports for the bearing (8) are fixed to the post (7) by means of two angle brackets and a levelling and adjustment piece (10) (figure 5), which facilitates the later fitting of these elements on site since it allows a certain clearance in the north-south direction. This will make it possible to counteract the tolerances in the civil work when it comes to locating the posts without having to carry out any cutting or welding on the structure which could damage the surface finish treatment (hot galvanized by immersion) and thus reduce the durability of the structural elements.

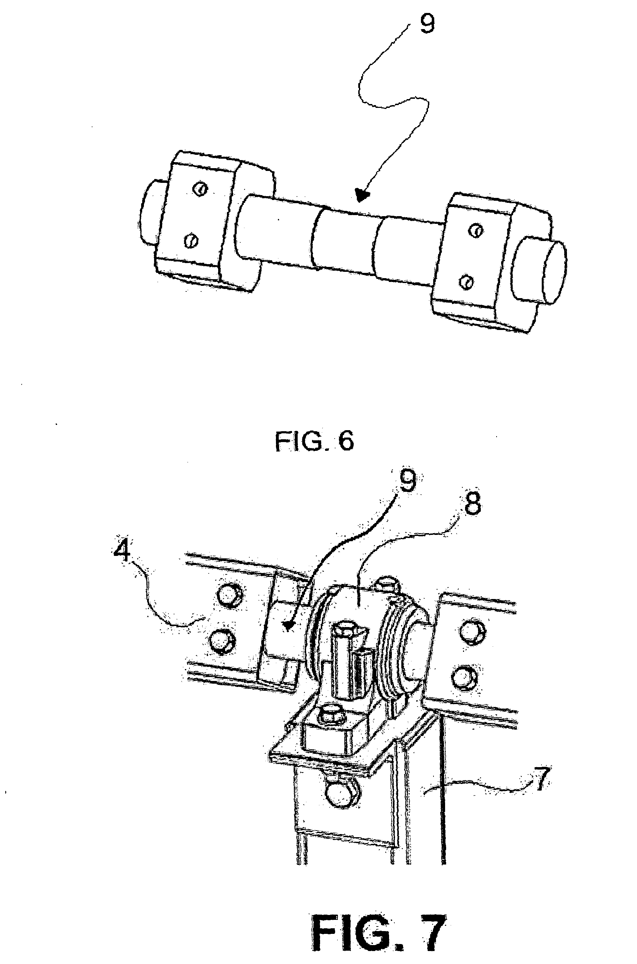

The main girders (4) consist of tubes of square cross-section. The joining of the main girders to each other via the upper part of the posts is done by means of the rotary transmitter shaft unit (9) formed by a machined shaft welded to a hexahedron, also machined, in each of its ends. See figure 6.

This machined hexahedron has the same dimensions as the interior part of the tube forming the main girder (4), fitting tightly therein, and each of the hexahedra also has four threaded drill-holes, two on each side, to allow the main girders to be joined together by means of screws, with the minimum possible angular distortion.

The shaft is narrowed and machined in its central part in the area where contact takes place with the bushings (13), for the following purposes:
1. To reduce friction.
2. To prevent any possible forces in the direction of the north-south alignments causing the rotary transmitter shaft unit to be displaced outside the zone of rotation.

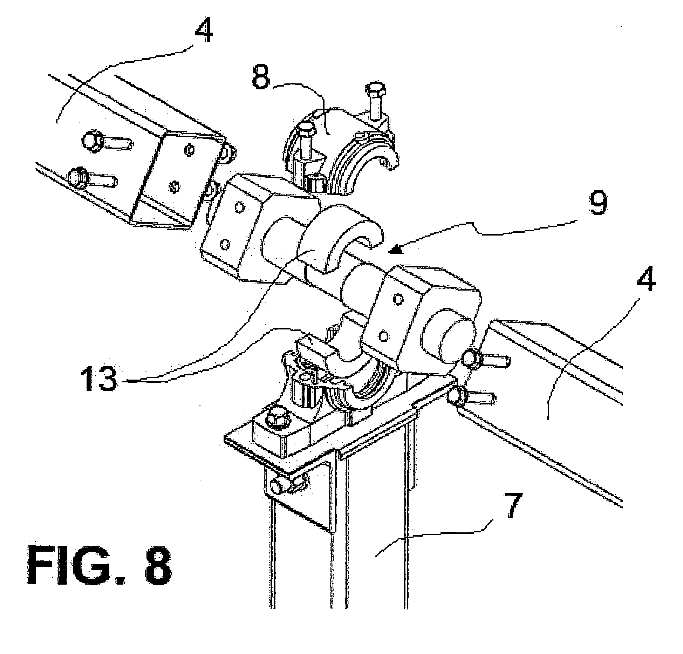

This rotary transmitter shaft unit (9) is responsible for transmitting the rotary movement between all the main girders (4), and succeeds in reducing the rotation differences between them to the minimum given the robustness of the system. See figures 7 and 8.

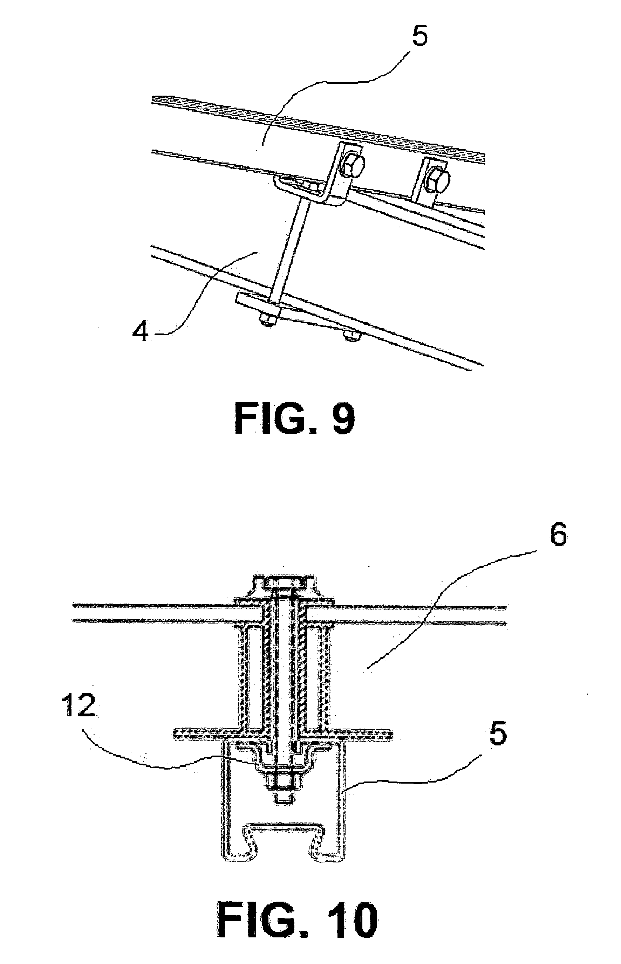

The secondary girders (5) are joined to the main girders by means of the system described in figure 9 in which it can be seen that two threaded rods have at each of their upper ends a folded piece in the shape of a U which clasps the secondary girder at two points, preventing the latter from being able to move or rotate which could cause damage to the photovoltaic panels (6) that are going to be fixed to them, while in the lower part it is attached by means of a flat-bar with two holes permitting the passage and fastening of these threaded rods.

These secondary girders (5) have a cross-section with an opening in the form of a rail which facilitates the location of a folded piece (12) with a nut, to which are screwed the fastening clamps supporting the photovoltaic panels (6). Said piece permits the fastening of the photovoltaic panels (6) at any point along their contour, being able to be fixed at all times at the most favourable point for the panel independently of its size. This folded piece (12) is shown in figure 10.

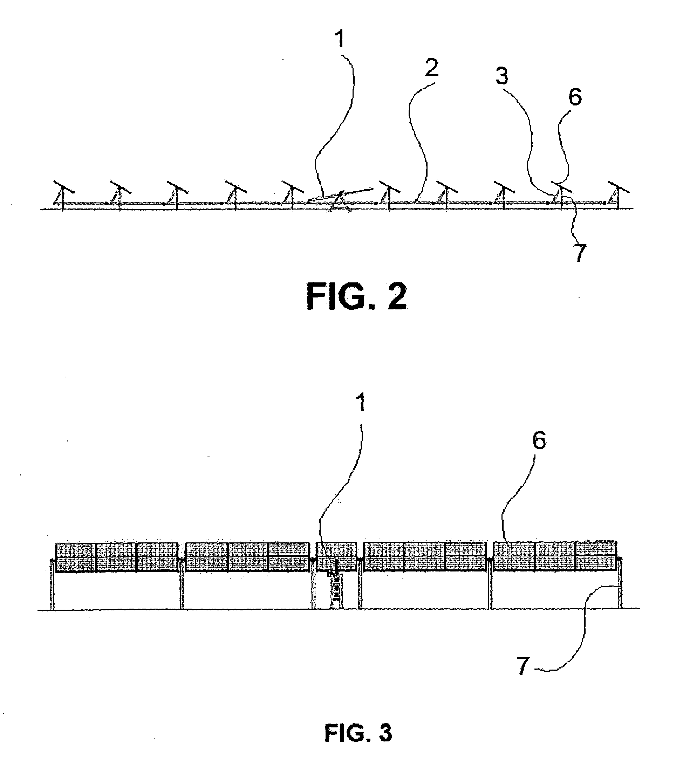

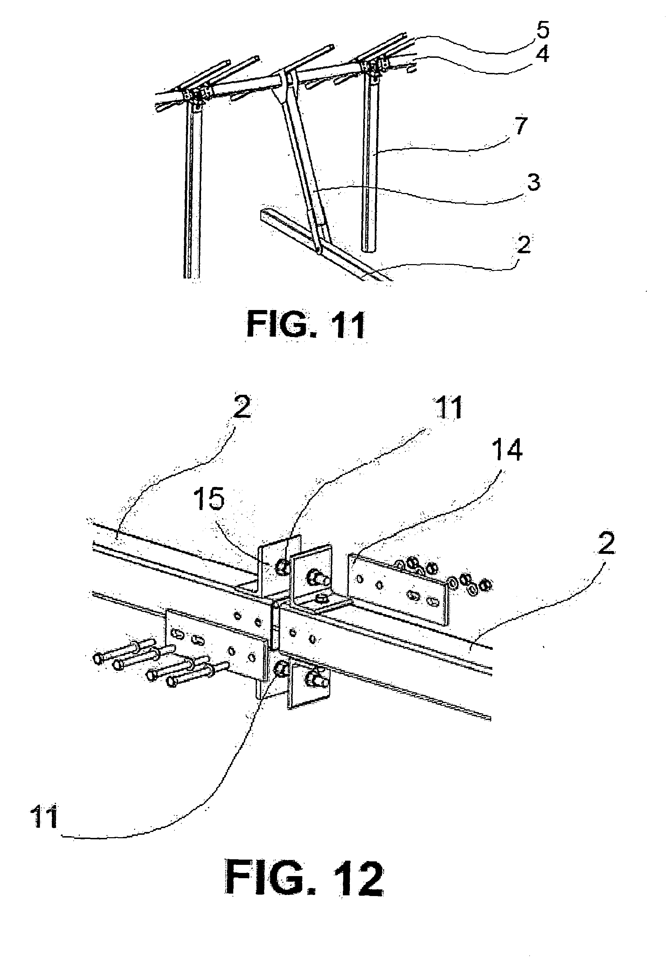

The overall movement of the entire tracker is achieved by means of a linear actuator (1) located in the centre thereof. The east-west shaft (2) transmits the movement of this linear actuator (1) to all the north-south alignments, as can be seen in figure 2. This transmitter shaft of the movement is connected to the main girder (4) by means of a connecting rod (3) as can be seen in figure 11. The attachment of this connecting rod (3) to the main girder (4) is done by means of two plates permitting the join to be made without leaving any clearance which could affect the angles of rotation of the different north-south alignments, and at the same time the stresses are transmitted properly from the connecting rod (3) to the main girder (4), which is a weak point of other trackers with similar characteristics. See figure 11.

The east-west shaft (2) is made up of tubular elements of square cross-section joined together along the entire length of the tracker. The join between these elements will be done by means of a pair of flat-bars (14) and two pairs of angle brackets (15) joined together by means of a threaded bar (11) as can be seen in figure 12. The aim of this attachment is that, once the errors between the north-south alignments are known, they can be corrected by means of adjusting the threaded bar (11) leaving all the connecting rods (3) perfectly aligned, with which the main girders (4) would also be aligned, ensuring that the angle of rotation of all the alignments is at all times the same. Once this adjustment has been achieved, two flat-bars with two drill-holes and two slotted holes are positioned in such a way that in each of the joins between two tubes the slotted holes in a different tube coincide.

Regarding the manufacture of this tracker, there is a series of alternatives and variants that will be evident for adapting the design to the demands of cost and availability of manufacturing means while still respecting the essence of the invention. So, the use of a linear actuator with a motorized nut and screw mechanism is particularly advantageous, though any other arrangement could equally well be used.

The dimensions will depend on the size and configuration of the panels to install. In an example of embodiment, the distance between posts stands at between 4 and 6 m, becoming reduced to close to 1 m in the central zone, where the actuator and the east-west shaft are located. The separation between alignments is approximately 6 m.

## Claims

1. Photovoltaic solar tracker of the type comprising an array of north-south alignments of photovoltaic solar panels (6) supported on posts (7) with the mediation of rotary transmitter shaft units (9), and linked together by means of an east-west shaft (2) which incorporates a linear actuator (1), **characterized in that** the support between the posts (7) and the rotary transmitter shaft units (9) comprises two self-lubricated bronze bushings (13) in the form of a half-ring, and **in that** the rotary transmitter shaft unit (9) comprises a machined shaft joined to two hexahedra, one at each of its ends.

2. Photovoltaic solar tracker according to claim 1, **characterized in that** the linear actuator (1) is located in the central part of the tracker.

3. Photovoltaic solar tracker according to claim 1, **characterized in that** included between the elements forming the east-west shaft (2) is a pair of flat-bars (14) and two pairs of angle brackets (15) joined together by means of a threaded bar (11).
